# EUROPEAN PATENT SPECIFICATION

(11) **EP 0 380 284 B1**
(45) Date of publication and mention of the grant of the patent: **05.01.1994**
(21) Application number: 90300665.8
(22) Date of filing: 23.01.1990
(51) Int. Cl.: H04N 5/782, G11B 21/10

(54) **Apparatus for and methods of producing tracking control signals**
Gerät und Verfahren zur Erzeugung von Spurregelsignalen
Appareil et procédé de production de signaux de commande de suivi de piste

(30) Priority: 24.01.1989 JP 14854/89
(43) Date of publication of application: 01.08.1990
(73) Proprietor: SONY CORPORATION, Tokyo 141 (JP)
(72) Inventor: Yanagihara, Naofumi, c/o Patents Division, Shinagawa-ku, Tokyo 141 (JP)
(74) Representative: Thomas, Christopher Hugo

(56) References cited:
- AT-B- 379 721
- AT-B- 380 759
- DE-A- 1 437 607
- US-A- 4 651 239

## Description

This invention relates to apparatus for and methods of producing tracking control signals. Such apparatus has application in reproducing digital signals recorded in substantially parallel tracks, for example, in digital audio tape (DAT) and in video signal reproduction.

Tracking control techniques have long been known to position one or more playback heads properly over data tracks from which previously recorded signals are reproduced. Such tracking control techniques are used in servo control circuitry for digital mass storage devices, such as magnetic disc drives, video record/reproduce devices (such as video tape recorders (VTRs)) and in recently introduced digital audio record/reproduce systems, such as DAT recorders. In VTR and DAT devices, video or audio information is recorded in parallel oblique tracks across a magnetic tape by a helical-scan rotary device. Preferably, digital codes are used to represent the video and audio information, such as pulse code modulated (PCM) signals, so as to provide low loss, high quality signal reproduction.

In a typical tracking control arrangement used with rotary heads (the principle of which also finds ready application in fixed head devices, such as mass storage devices), a control signal is recorded when the useful information (that is, the digital signals representing video or audio information) is recorded; and this control signal, when played back, is used to determine any deviation of the position of the playback head from the centre of the track being scanned. For example, in one previously proposed arrangement, the control signal is recorded by a stationary control head along a longitudinal edge of the magnetic tape on which the oblique tracks of digital signals are recorded. The rotary phase of the scanning heads is compared with the phase of the reproduced control signal; and any phase differential therebetween is used to adjust the position of the heads relative to the scanned tracks.

As VTR and DAT systems became miniaturized, constraints on size and volume increased, making it desirable to eliminate various mechanical elements. The stationary control head, whose primary function was to reproduce pre-recorded control signals, thus became surplusage. Accordingly, it has been proposed in JP-A-59/112406 to provide a tracking control technique which does not rely on the aforementioned stationary control head. In that proposal, the rotary transducer arrangement is used to sense tracking errors.

The inherent ability of a PCM signal to be processed, so as to be time-base compressed, time division multiplexed, etc., allows various control signals to be recorded in the same track as the PCM signal but without interfering therewith. Such non-interfering combination of different types of signals is not readily available or easily attained when the information is recorded in analogue form. Notably, a PCM signal need not be recorded or reproduced continuously but, rather, samples may be recorded in spaced apart locations, thereby facilitating the interspersing of other controlling information therewith. Thus, tracking control for VTR and DAT systems can be obtained by recording tracking information signals in the same track, but at different discrete areas, as the PCM signals.

In one previously proposed technique in which tracking information signals are recorded in the same tracks as PCM signals, a plurality of rotary heads are angularly spaced on a drum, with each head scanning a single track such that one track at a time is recorded or reproduced. PCM signals are recorded in a relatively long data area which occupies the centre portion of a track, and the tracking information signals are recorded in leading and lagging positions relative to the data area. In a simplified form, the tracking information signal comprises a pilot signal and, in addition, a synchronizing signal is also recorded in each track and spaced from a respective pilot signal. Thus, in one track a synchronizing signal may be recorded, followed by a pilot signal, followed by the data area, followed by another pilot signal which, in turn, is followed by yet another synchronizing signal. In an adjacent track, a pilot signal may be recorded, followed by a synchronizing signal, followed by the data area, followed by another synchronizing signal which, in turn, is followed by yet another pilot signal. During a recording operation, each head used to record PCM, pilot and synchronizing signals has a width which is wider than the resultant track. Thus, a succeeding track slightly overlaps a preceding track such that the tracks are adjacent to one another without the provision of guard bands. The recording of a later track tends to 'over record' a narrow longitudinal portion of a preceding track.

As is known when recording tracks of high density, adjacent tracks should be recorded with heads having different azimuths. By reason of the phenomenon known as azimuth loss, a signal of relatively higher frequency recorded with one azimuth will not be picked up to any significant degree as cross-talk when an adjacent track is scanned by a head of different azimuth. However, signals of relatively lower frequency do not exhibit azimuth loss and, thus, will be picked up as cross-talk. Thus, when a head of, for example, azimuth A scans a track recorded previously by a head of the same azimuth A, any low frequency pilot signal in an adjacent track recorded with azimuth B will be picked up as cross-talk. The amplitude of this cross-talk pilot signal component is a function of the tracking error of the head relative to the track which it is scanning. Based upon this tracking error, remedial efforts are made to return the head to its proper tracking position, such as aligned with the centre of the track, as by increasing or decreasing the tape speed, which results in a realignment of the head relative to the track.

Whereas the pilot signal is recorded with a relatively low frequency to minimize azimuth loss and thus permit cross-talk to be detected, a synchronizing signal is recorded at a relatively high frequency such that when the synchronizing signal in an adjacent track is picked up, azimuth loss attenuates its amplitude. Of course, the synchronizing signal recorded in a given track is reproduced by the head which scans that track. By suitably recording the pilot and synchronizing signals at discrete times in each track, the resultant track pattern has a synchronizing signal in one track adjacent to the pilot signal in an adjacent track. Thus, when a given track is scanned, at the time that the synchronizing signal in that track is reproduced, tracking control circuitry may be triggered to detect any cross-talk pilot signal that is picked up from an adjacent track. For example, when the head of azimuth A senses the synchronizing signal which had been recorded with azimuth A previously, the tracking control circuitry is triggered to sense any pilot signal which had been recorded in an adjacent track with azimuth B and which now may be picked up as cross-talk by the scanning head of azimuth A by reason of the aforementioned azimuth loss phenomenon.

However, the aforementioned technique of recording relatively low frequency pilot signals and higher frequency synchronizing signals in discrete locations in each track such that the synchronizing signal in one track is positioned opposite to the pilot signal in an adjacent track results in a relatively complicated recording scheme. The recording of signals of substantially different frequencies to take advantage of the azimuth loss phenomenon adds to this complexity.

Our US patent specification US-A-4 651 239 discloses a somewhat similar arrangement, but in which pilot signals are recorded in alternate tracks.

According to the present invention there is provided apparatus for producing tracking control signals indicative of a tracking error of transducer means scanning parallel tracks recorded side-by-side without guard bands on a record medium, at least alternate ones of said tracks containing tracking information signals recorded therein in predetermined areas, said apparatus comprising:
first and second heads mounted in said transducer means; and
output means responsive to sensed tracking information signal levels to produce a tracking control signal;
characterized in that:
said first and second heads are mounted adjacent to one another and displaced from each other in a direction substantially parallel to said tracks, said first and second heads also being offset from each other in a direction substantially transverse to said tracks so that while said first head scans a first track said second head concurrently scans an adjacent second track and picks up the tracking information signals of said first track and of a third track;
sensing means senses the levels of said tracking information signals picked up by said second head;
timing means is responsive to tracking information signals picked up by said first head for establishing times at which said levels of said tracking information signals picked up by said second head are sensed; and
output means produces said tracking control signal in dependence on a comparison of said sensed levels of said tracking information signals picked up by said second head.

According to the present invention there is also provided a method of producing tracking control signals indicative of a tracking error of transducer means comprising first and second heads scanning parallel tracks recorded side-by-side without guard bands on a record medium, at least alternate ones of said tracks containing tracking information signals recorded therein in predetermined areas, by sensing tracking information signal levels to produce a tracking control signal;
characterized in that:
said first and second heads are mounted adjacent to one another in said transducer means and displaced from each other in a direction substantially parallel to said tracks, said first and second heads also being offset from each other in a direction substantially transverse to said tracks so that while said first head scans a first track said second head concurrently scans an adjacent second track and picks up the tracking information signals of said first track and of a third track;
the levels of said tracking information signals picked up by said second head are sensed;
times at which said levels of said tracking information signals picked up by said second head are sensed are established responsive to tracking information signals picked up by said first head; and
said tracking control signal is produced in dependence on a comparison of said sensed levels of said tracking information signals picked up by said second head.

The invention will now be described by way of example with reference to the accompanying drawings, throughout which like parts are referred to by like parts, and in which:
Figure 1 is a schematic representation of a known rotary head arrangement for scanning oblique tracks across a magnetic tape;
Figure 2 is a schematic representation of an oblique pattern used in a known method to detect tracking errors;
Figure 3 is a schematic representation of a track pattern used in an embodiment of the present invention to detect tracking errors;
Figure 4 is a schematic representation of a rotary head arrangement used to scan the track pattern of Figure 3;
Figure 5 is a block diagram of one example of circuitry used to detect a tracking error when the track pattern of Figure 3 is scanned;
Figures 6A to 6D are timing waveforms which are useful in understanding the operation of the circuit of Figure 5;
Figure 7 is a block diagram of another example of circuitry used to detect a tracking error when the track pattern of Figure 3 is scanned;
Figures 8 to 12 are schematic representations of respective alternative track patterns used in embodiments of the present invention to detect tracking errors; and

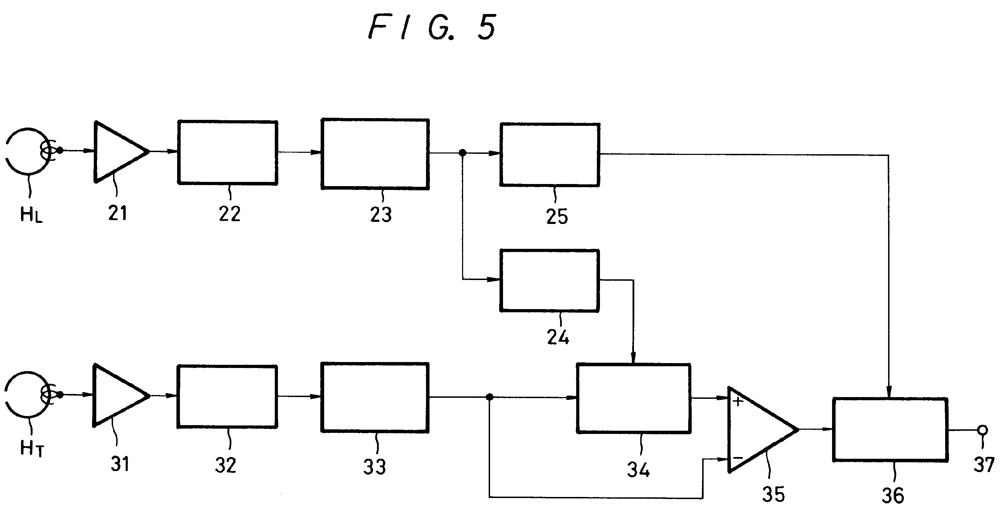

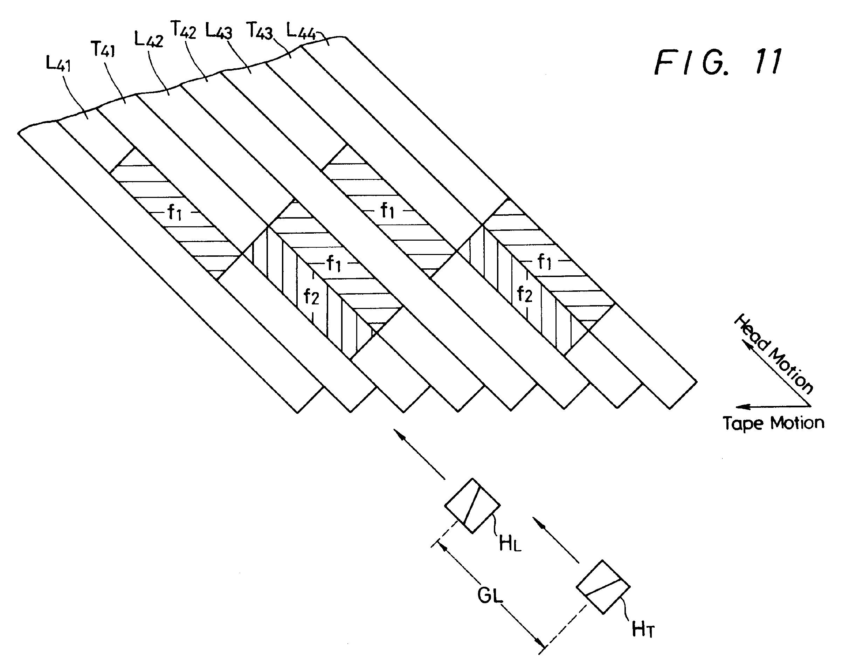

Figures 5A to 7A show modified circuitry to accommodate the track patterns shown in Figure 11.

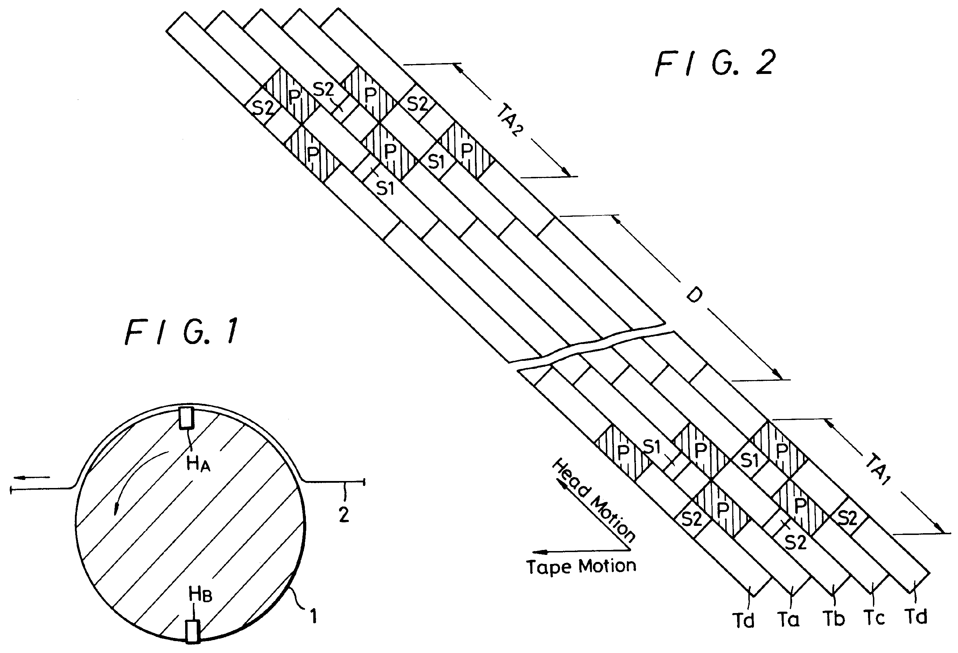

Before describing embodiments of the present invention, reference is made to Figures 1 and 2 which illustrate a known rotary head arrangement and track pattern scanned thereby for sensing tracking errors when data tracks are scanned by those rotary heads. Let it be assumed that heads HA and HB have different azimuths identified as azimuths A and B, respectively. The heads HA and HB are mounted on a rotary drum 1 which helically scans a magnetic tape 2 being transported in the illustrated direction. The heads HA and HB are spaced 180° apart; and the tape 2 is wrapped about a peripheral portion of the drum 1 to extend over an angle of 90°. That is, when the drum 1 rotates by 90°, the head HA scans substantially a full track across the tape 2 wrapped about the drum 1.

The width (or gap-length) of each of the heads HA and HB is greater than the width of the track which is formed on the tape 2. Thus, during recording, a portion of the track which was recorded by the head HA is over-recorded by the head HB. Consequently, when these tracks are reproduced, each head HA and HB extends across the track being scanned thereby to an adjacent track which had been recorded by the other head HB or HA.

During a recording operation, digital signals, pilot signals and synchronizing signals are supplied to each head HA and HB at predetermined times, that is, when the head HA or HB reaches particular locations on the track being traced thereby, resulting in the track pattern shown in Figure 2. Digital data are recorded in the major portion of each track, illustrated in Figure 2 as data area D. A tracking area TA1 is recorded in leading relation to each data area D, and a tracking area TA2 is recorded in lagging relation to the data area D, as is also shown. A particular repetitive cycle of track patterns is comprised of a track Ta, followed by a track Tb, followed by a track Tc, followed by a track Td. This cycle of four tracks Ta to Td then repeats. For example, in track Ta, a pilot signal P is recorded in the tracking area TA1, followed by a synchronizing signal S1; and in the tracking area TA2, the synchronizing signal S1 is recorded, followed by the pilot signal P. As illustrated, the pilot signal P is longitudinally spaced from the synchronizing signal S1, for a reason soon to be described.

In the adjacent track Tb, a synchronizing signal S2 followed by the pilot signal P is recorded in the tracking area TA1; and the pilot signal P followed by the synchronizing signal S2 is recorded in the tracking area TA2. Here too, the synchronizing signal S2 is longitudinally spaced from the pilot signal P.

Similarly, in the track Tc, the pilot signal P followed by the synchronizing signal S1 is recorded in the tracking area TA1; and the synchronizing signal S1 followed by the pilot signal P is recorded in the tracking area TA2. Here too, the pilot and synchronizing signals P and S1 are longitudinally spaced from each other in each tracking area TA1 and TA2. Finally, in the track Td, the synchronizing signal S2 is followed by the pilot signal P in the tracking area TA1; and the pilot signal P followed by the synchronizing signal S2 is recorded in the tracking area TA2. It is seen that the pilot and synchronizing signals P and S2 recorded in each tracking area TA1 and TA2 are longitudinally spaced from each other.

In the example of Figure 2, the pilot signal P has a relatively low frequency such that it is not subject to significant azimuth loss. Hence, if the head HA records the track Ta and the track Tc, and if the head HB records the track Tb and the track Td, when the head HA scans the track Ta, it is expected that the pilot signal P recorded in the tracks Tb and Td, both adjacent to the track Ta, will be picked up as cross-talk. However, the synchronizing signals S1 and S2 exhibit relatively higher frequency and, thus, are subject to azimuth loss. Consequently, when the head HA scans the track Ta, it is expected that the synchronizing signals S2 recorded in the adjacent tracks Tb and Td will be picked up, but will be significantly attenuated. Hence, cross-talk synchronizing signals are, for all practical purposes, minimal.

In the track pattern illustrated in Figure 2, each pilot signal P is recorded in a substantially equal area from track to track; but the synchronizing signals are recorded in areas of different lengths from one track to the next. For example, the synchronizing signals S1 and S2 are recorded in substantially equal but relatively small areas in the tracks Ta and Tb, respectively; whereas these synchronizing signals S1 and S2 are recorded in substantially equal but larger areas in the tracks Tc and Td. Furthermore, the synchronizing signal in one track is recorded in a position such that it is opposite the pilot signal P in the next adjacent track. Thus, in both tracking areas TA1 and TA2, the synchronizing signal S1 in the track Ta is adjacent to the pilot signal P in the track Tb; the synchronizing signal S2 in the track Tb is adjacent to the pilot signal P in the track Tc; the synchronizing signal S1 in the track Tc is adjacent to the pilot signal P in the track Td; and the synchronizing signal S2 in the track Td is adjacent to the pilot signal P in the track Td. It is appreciated that relatively complex circuitry must be used to generate the pilot and synchronizing signals of three different frequencies (it is assumed that the synchronizing signals S1 and S2 have different frequencies); and an accurate timing arrangement must be maintained to assure the positioning of the synchronizing signals relative to the adjacent pilot signals when recording the illustrated track pattern.

To sense tracking errors, let it be assumed that the head HA scans the track Ta during a reproduction (or read) operation. Now, when the head HA reproduces the synchronizing signal S1, detecting circuitry (not shown) is enabled to detect the cross-talk pilot signal P picked up from an adjacent track. It is seen from the track pattern of Figure 2 that at the time the synchronizing signal S1 is read, the pilot signal P in the adjacent track Tb may be picked up as cross-talk; and if the pilot signal P is detected at this time, the level of the detected pilot signal P is a function of the overlap of the head HA on the adjacent track Tb. If this cross-talk pilot signal level is too low, it is concluded that the head HA is offset to the left of centre of the track Ta. However, if the cross-talk pilot signal level is too great, it is concluded that the head HA is offset to the right of centre of the track Ta. A similar operation is carried out when the tracks Tb, Tc and Td are scanned.

At a predetermined time following the detection of the synchronizing signal S1, the pilot signal detecting circuitry may be enabled once again to detect any pilot signal cross-talk that may be picked up from the other adjacent track Td. Likewise, the cross-talk pilot signal picked up from the track Ta may be detected at a predetermined time following the sensing of the synchronizing signal S2 by the head HB when the track Tb is scanned. Thus, by using the sensing of the synchronizing signal as a reference, cross-talk pilot signals picked up from one and then the other adjacent tracks may be detected. Tracking errors may be determined by comparing the cross-talk pilot signals picked up from the tracks Tb and Td when the track Ta is scanned, by comparing the cross-talk pilot signals picked up from the tracks Tc and Ta when the track Tb is scanned, by comparing the cross-talk pilot signals picked up from the tracks Td and Tb when the track Tc is scanned, and so on. The determined tracking error then may be applied to a servo circuit or other capstan motor control to regulate the speed at which the tape 2 is transported, thereby returning the head HA (and the head HB) to the centre of the track being scanned thereby so as to correct tracking errors.

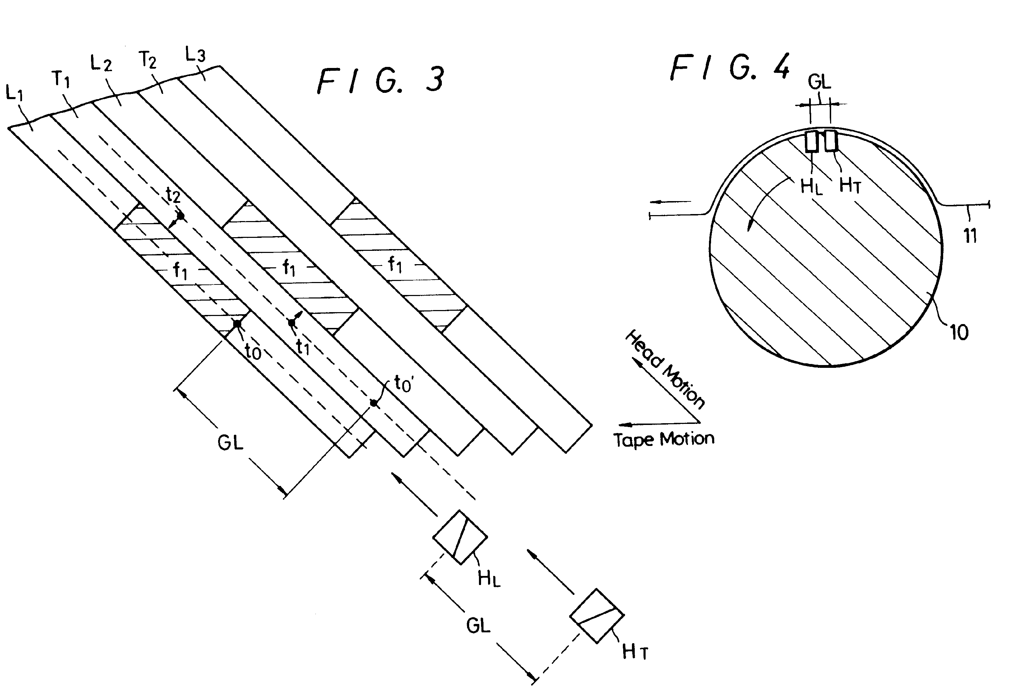

Turning now to Figure 3, there is illustrated one example of a track pattern which is sensed by the rotary heads illustrated in Figure 4 to reproduce digital signals from the respective tracks with minimal tracking error. In the preferred embodiment shown in Figure 4, heads HL and HT are mounted on a rotary drum 10 in a manner such that they are offset from each other in a direction parallel to the rotary axis of the drum 10 and also are angularly displaced from each other. In this configuration, the head HL moves into contact with a magnetic tape 11 in advance of the head HT, and thus the head HL is referred to as the leading head and the head HT is referred to as the trailing head. Figure 3 illustrates the relationship of the leading and trailing heads HL and HT to each other and to the tape 11. The offset of the heads is seen to be approximately equal to a track pitch and in a direction transverse of the tracks, and the angular displacement GL of the heads is seen to be in a direction parallel to the tracks. By reason of the offset and angular displacement thereof, the leading and trailing heads HL and HT scan two tracks concurrently over the major portion of a scanning trace of each. For convenience, the track scanned by the leading head HL is referred to as a leading track L and the track scanned by the trailing head HT is referred to as a trailing track T. As was true in Figures 1 and 2, the tape 11 is wrapped about a peripheral surface of the drum 10 over an angular extent of, for example, 90°. Thus, as the drum 10 rotates by 90°, the head HL (or the head HT) scans a track across the tape 11.

The fact that the heads HL and HT are closely spaced so as to be offset by an amount substantially equal to the pitch of the record tracks and angularly displaced by a relatively small amount GL results in better track linearity than when the heads are mounted diametrically oppose to each other, as in Figure 1. It is appreciated that if the drum 1 of Figure 1 does not rotate with precise uniformity, the track recorded or reproduced by one head, such as the head HA, may differ in its alignment from and relative to the track formed by the other head HB. However, when the two heads are mounted close to each other, as are the heads HL and HT in Figure 4, any non-uniformity in the rotation of the drum 10 will result in an alignment of one track, such as the track recorded or reproduced by the head HL, substantially the same as the alignment of the other track. It is recognized that there is a greater likelihood of one half rotation of the drum 10 differing from the next half rotation thereof. But, if the heads are closely spaced, as in the Figure 4 embodiment, any change in the rotation of the drum 10 will have substantially equal effects on the tracks formed by both heads. Thus, the alignments of the tracks will be maintained relative to each other even if the drum 10 undergoes changes in its rotational characteristics.

It is possible that the angular displacement GL may differ from one drum to another. To account for such possible irregularities in the displacement of the heads, a time delay may be introduced in the signal produced by the trailing head HT to compensate for differences in the angular displacement GL. For example, if the angular displacement GL is less than a particular standard, this time delay may be increased. Conversely, if the angular displacement GL is greater than the standard, the time delay may be reduced. Such time delay adjustment may be carried out during the test phase of the manufacturing operation, as when a pre-recorded reference tape having reference signals recorded in adjacent tracks with precise timing is reproduced by the heads HL and HT, and the time delay of the reproduced signals is compared with a reference time differential. Any differences between the measured time delays and the reference time differential as may be caused by manufacturing tolerances in the angular displacement GL then may be compensated by adjusting the time delay imparted to the respective playback channels of the heads HL and HT. Thus, mechanical irregularities may be corrected by electronic adjustments.

During a recording operation, the track pattern illustrated in Figure 3 is formed. A tracking information signal, such as a pilot signal of frequency f1, is recorded by the leading head HL in leading tracks L1, L2, L3 and so on. No tracking information signals are recorded in trailing tracks T1, T2, etc., which are recorded by the trailing head HT. As illustrated, the tracking information signal is recorded in a predetermined area in advance of a data area (not shown) in which the digital signals are recorded; and the tracking information area is preferably disposed at the leading portion of each track. As will be described below, the tracking information signal may be recorded in a leading position as well as a lagging position relative to the data area.

Preferably, the tracking information signal is of a frequency that is not substantially attenuated by azimuth loss. Thus, when the trailing track T1 is scanned by the trailing head HT, cross-talk components of tracking information signals are produced thereby when the adjacent track L1 or the adjacent track L2 is scanned. As an example, the tracking information signal may be a pilot signal whose frequency f1 is within the range of several hundred KHz to several MHz. In the preferred embodiment, the tracking information signal is recorded in alternate tracks, such as the leading tracks L1, L2, etc. in substantially the same position in each such track.

The manner in which the tracking information signal pattern recorded in Figure 3 is detected and used to indicate tracking errors will now be described in conjunction with the tracking control signal producing circuit shown in Figure 5 in which the tracking information signal picked up by the leading head HL is used to produce sampling signals at first and second predetermined times; and the level of the tracking information signal picked up by the trailing head HT at those predetermined times is sensed. Accordingly, the leading head HL is coupled to a frequency detector 23 by way of an amplifier 21 and a band-pass filter 22, the latter being tuned to pass the frequency of the pilot signal. The frequency detector 23 detects the pilot signal and produces a relatively narrow pulse in response thereto. First and second delay circuits 24 and 25 exhibit different time delays ta and tb and are coupled to the frequency detector 23 to delay the pulse produced thereby. These delayed pulses are used as sampling pulses.

The trailing head HT is coupled to an envelope detector 33 by way of an amplifier 31 and a band-pass filter 32 tuned to pass the frequency f1 of the pilot signal. The envelope detector 33 produces a signal whose amplitude is determined by the level of the pilot signal passed by the band-pass filter 32. The output of the envelope detector 33 is coupled to a sample-and-hold circuit 34 which is supplied with a sampling pulse produced by the delay circuit 24. The sampled pilot signal level produced by the sample-and-hold circuit 34 is coupled to one input of a comparator 35, the other input thereof being connected directly to the output of the envelope detector 33. The comparator 35 may be constructed as a difference amplifier whose output is coupled to yet another sample-and-hold circuit 36, this circuit being supplied with the sampling pulse produced by the delay circuit 25. The output of the sample-and-hold circuit 36 is coupled to an output terminal 37 as a tracking control signal.

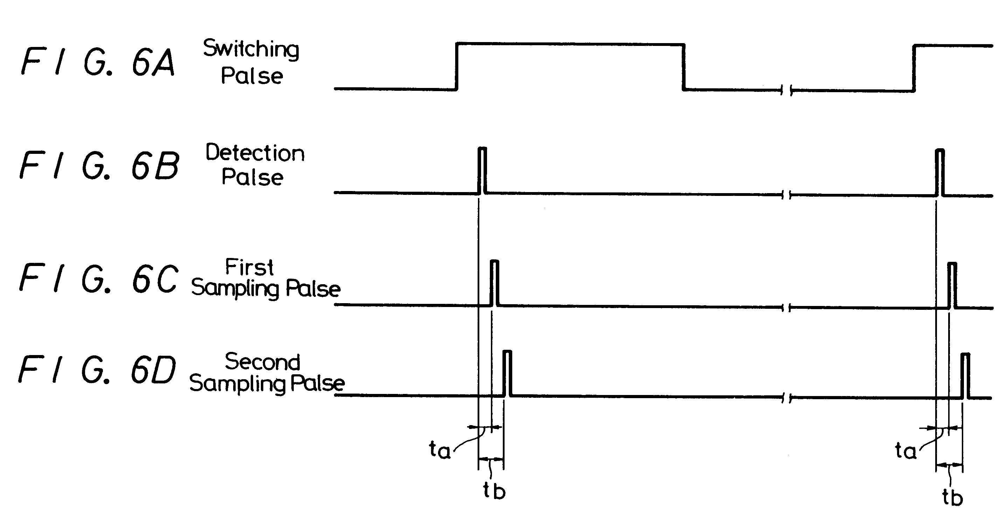

In operation, let it be assumed that the leading head HL scans the track L1 as the trailing head HT scans the trailing track T1. Figure 6A represents a switching pulse that defines the period during which the heads HL and HT scan the tracks L1 and T1 and are enabled to reproduce signals from the tape 11. The head HL senses the tracking information signal recorded in the track L1 when the head HL arrives at the position to represented by the black dot shown in Figure 3. At that time, since the head HT trails the head HL by the displacement GL, the head HT is at the position to' in the track T1. At the position to when the head HL senses the tracking information signal recorded in the track L1, the frequency detector 23 generates the detection pulse shown in Figure 6B. This detection pulse is delayed by the time delay ta in the delay circuit 24 to produce the sampling pulse shown in Figure 6C. The detection pulse is also delayed by the time delay tb in the delay circuit 25 to produce the sampling pulse shown in Figure 6D.

At the delayed time ta at which the sampling pulse shown in Figure 6C is produced, the head HT advances from the position to' to the position t1. It is appreciated that at the position t1, and for a brief time preceding the arrival at the position t1, the head HT picks up as cross-talk the tracking information signal recorded in the adjacent track L2. At the time t2, that is, when the head HT reaches the position t1, the sampling pulse produced by the delay circuit 24 is used by the sample-and-hold circuit 34 to detect the amplitude of this picked-up tracking information signal. This sampled cross-talk signal is stored and compared by the comparator 35 to whatever other output signal levels are produced by the trailing head HT. Thus, as the head HT continues to scan the track T1, it is expected that the output of the comparator 35 exhibits a fluctuating amplitude. However, this comparator output is not detected, or sampled, until the time tb, at which time the sampling pulse shown in Figure 6D is applied to the sample-and-hold circuit 36. The time tb corresponds to the arrival of the head HT at the position t2. At that time, the head HT picks up the tracking information signal recorded in the adjacent track L1. The comparator 35 produces an output signal representing the difference between the tracking information signal picked up by the head HT at the position t1, that is, the cross-talk pilot signal f1 picked up from the adjacent track L2, with the tracking information signal picked up by the head HT from the adjacent track L1 when the head HT reaches the position t2. Thus, the comparator output at the time tb is sampled by the sample-and-hold circuit 36 and supplied as a tracking control signal to the output terminal 37.

Assuming that the tracking information signal is recorded with substantially constant amplitude in the leading tracks L1, L2, L3 and so on, any difference between the sampled cross-talk tracking information signal picked up by the trailing head HT at the positions t1 and t2 is representative of the deviation of this head from the centre line of the trailing track scanned thereby. If the cross-talk tracking information signal picked up at the position t1 is greater than that picked up at the position t2, the heads HT and HL are to the right of centre of the tracks being scanned. Conversely, if the cross-talk tracking information signal picked up at the position t1 is less than that picked up at the position t2, the heads HL and HT are displaced to the left of centre of their respective tracks. The difference between these cross-talk tracking information signals is thus used as a tracking control signal to adjust the movement of the tape 11 and thereby restore the heads HL and HT to the centres of the tracks scanned thereby.

It is seen that the tracking information signal reproduced by the head HL from the leading tracks L1, L2, etc., establishes the times at which the level of the cross-talk tracking information signal picked up by the trailing head HT from the two tracks adjacent to the trailing track T1 are sensed and compared. This timing, referenced to the sensing of the tracking information signal reproduced by the leading head HL, is selected such that the head HT picks up a cross-talk tracking information signal from only one adjacent track at a time. That is, at the position t1 the tracking information signal is recorded adjacent to the head HT in the track L2, but not in the adjacent track L1. Likewise, at the time that the head HT reaches the position t2, the tracking information signal is recorded in the adjacent track L1 but not in the adjacent track L2. Consequently, at the sampling times established by the delay circuits 24 and 25, any tracking information signal which is detected by the trailing head HT is picked up from only one adjacent track. Thus, the relative position, or tracking error, of the head HT relative to that one track can be determined. By comparing with each other the tracking information signal picked up by the head HT at positions t1 and t2, an accurate indication of any tracking error of the head HT, as well as a substantially identical tracking error of the head HL, is determined.

By using the pilot signal f1 as the tracking information signal recorded in alternate tracks, the more complicated pattern shown in Figure 2 is avoided. The pilot signal f1 serves a dual purpose: the level of the cross-talk pilot signal picked up by the trailing head HT is indicative of any tracking error; and when reproduced by the head HL, it provides a reference from which proper sampling times may be established to sense the cross-talk pilot signal which is picked up at those sampling times by the trailing head HT. Thus, a pilot signal having only one frequency f1 need be recorded in alternate tracks, which can be achieved relatively simply and without severe timing constraints as are otherwise apparent from the more complicated track pattern shown in Figure 2. At the same time, the pilot signal detecting circuit used to sense tracking errors may be relatively simple, as shown in Figure 5.

As yet another advantage, since tracking information signals need not be recorded in the trailing tracks, other useful information, such as code signals, may be recorded therein.

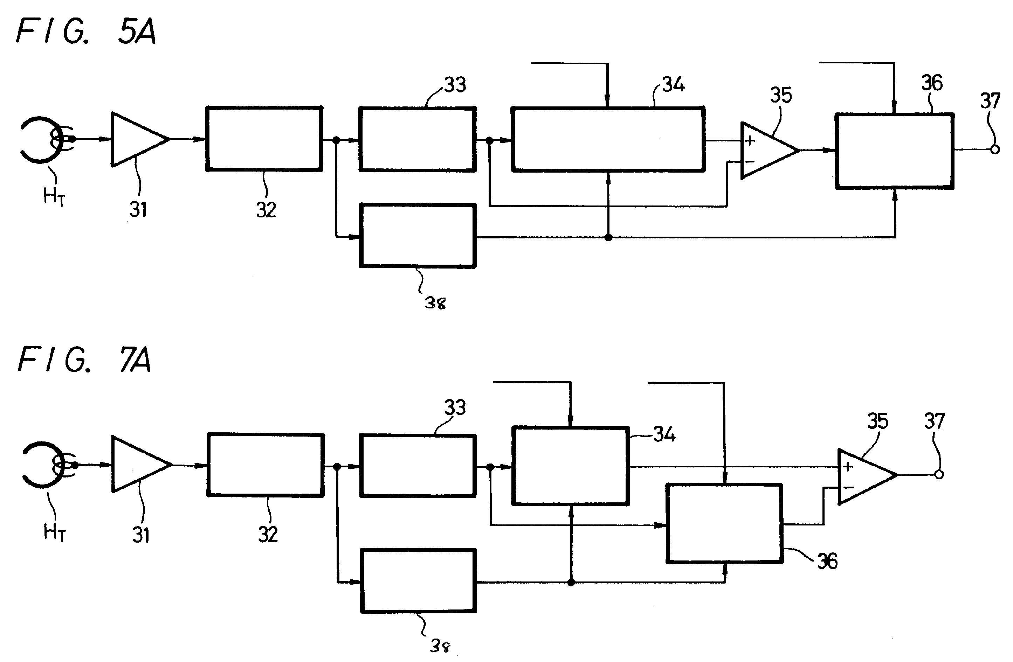

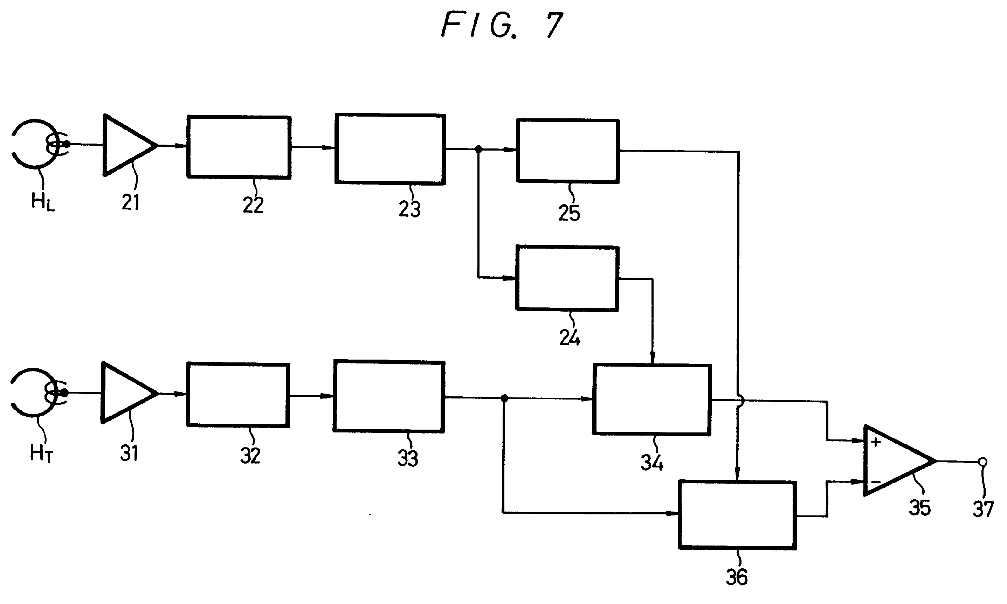

Another circuit for producing a tracking control signal is illustrated in Figure 7. In the circuit of Figure 7, the sample-and-hold circuit 36 is coupled to the envelope detector 33 and responds to the sampling pulse shown in Figure 6D to sample the level of the cross-talk tracking information signal produced by the envelope detector 33 at the time that the trailing head HT reaches the position t2. The comparator 35 is coupled to the sample-and-hold circuits 34 and 36 to produce a tracking control signal as a function of the difference between the sampled cross-talk tracking information signal picked up by the trailing head HT at the positions t1 and t2. Nevertheless, the circuit shown in Figure 7 achieves substantially the same result as that of Figure 5; and in both circuits, the tracking control signal is produced by comparing the level of the tracking information signal picked up from adjacent tracks at the positions t1 and t2.

In both Figures 5 and 7, it is seen that sample-and-hold circuits 34 and 36 are supplied with the sampling pulses shown in Figures 6C and 6D, respectively, at those times when the trailing head HT picks up cross-talk tracking information signals, or cross-talk pilot signals, from only one adjacent track. Thus, the level of the pilot signal picked up from one adjacent tack may be compared with the level of the pilot signal picked up from the other adjacent track. Any difference between the cross-talk pilot signal levels is a function of the tracking error of the heads. As before, this tracking error may be corrected by controlling the manner in which the tape 11 is transported.

Although Figure 3 illustrates tracking information signals recorded at the beginning portion of each track, it is appreciated that the tracking information signals may be recorded at any other desired position and, moreover, two or more, or even several, discrete areas of tracking information signals may be provided in alternate tracks L1, L2, etc. For example, a pilot signal may be recorded in advance of, following, or in the middle of the data area.

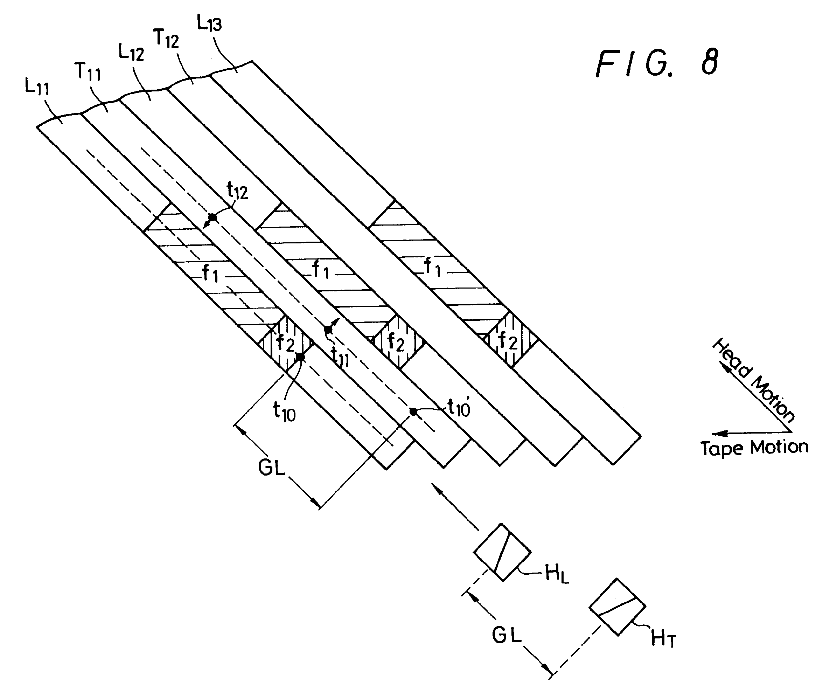

Figure 8 illustrates another track pattern which may be used. The pattern of Figure 8 differs from that of Figure 3 in that those tracks which contain the pilot signal f1, that is, the leading tracks L11 , L12, etc., also contain a synchronizing signal of frequency f2. The synchronizing signal frequency f2 preferably is greater than the pilot signal frequency f1 such that any cross-talk component that may be picked up by, for example, the trailing head HT suffers from azimuth loss and is substantially attenuated. Thus, it is appreciated that the synchronizing signal is recorded with the same azimuth as used to record the pilot signal and the digital data signals.

The circuitry of Figures 5 and 7 may be used with the track pattern of Figure 8; and the band-pass filter 22 and the frequency detector 23 are preferably tuned to pass and detect the synchronizing signal of frequency f2. The synchronizing signal f2 is used to establish a reference from which the sampling pulses supplied to the sample-and-hold circuits 34 and 36 are generated.

For example, when the leading head HL reaches the position t10, the trailing head HT is at the position t10'. At the position t10' the leading head HL detects the synchronizing signal f2, resulting in the generation of the pulse shown in Figure 6B by the frequency detector 23. As before, this detection pulse is delayed by the delay time ta which corresponds to the time that the trailing head HT reaches the position t11. At that time, the pilot signal f1 in the adjacent track L12 is sampled. Thereafter, at a further time the level of the pilot signal f1 picked up from the adjacent track L11 is sensed.

Thus, it is seen that the pattern of Figure 8 operates in much the same way as that of Figure 3, except that the synchronizing signal f2 is used to establish the reference from which the sampling pulses are generated at delayed times. The use of an additional synchronizing frequency f2 in Figure 8 adds little additional complexity to the recording circuitry used to produce the illustrated track pattern. However, since the frequencies f1 and f2 are discrete and are recorded at different times, optimum frequencies may be selected easily and without requiring expensive or complicated circuitry. Nevertheless, the advantages discussed above in conjunction with Figure 3 are attained by the track pattern of Figure 8. In addition, by sensing the synchronizing frequency f2, which may have a frequency capable of prompt detection, an accurate timing reference may be established from which the delayed sampling pulses are generated.

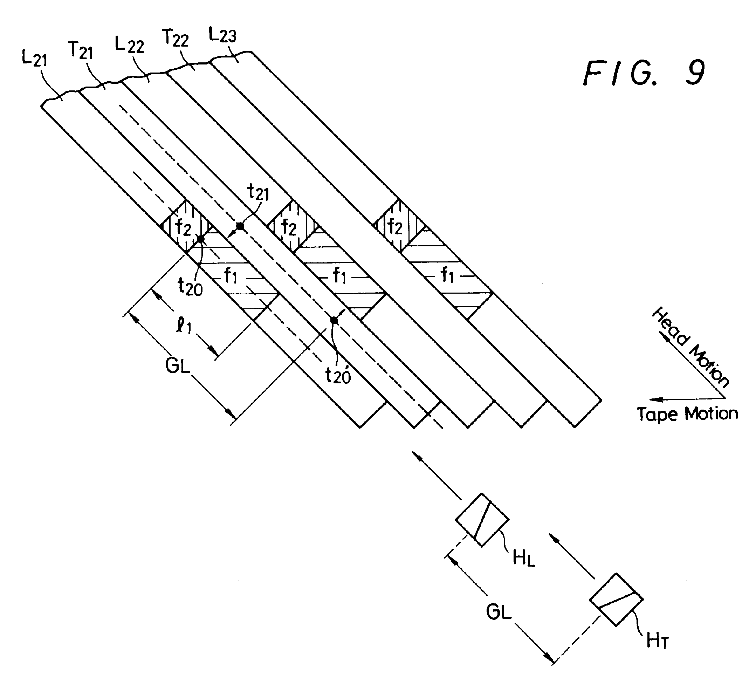

Turning now to Figure 9, there is illustrated a track pattern which is a modification of the track pattern of Figure 8. The differences between these track patterns lie primarily in the positioning of the synchronizing signal f2 relative to the pilot signal f1 in the alternate tracks L21, L22, etc., in which the tracking information signals are recorded. In Figure 8, the synchronizing signal is recorded in a leading position relative to the pilot signal; and in Figure 9 the synchronizing signal is recorded in a lagging position relative to the pilot signal. Nevertheless, in Figure 9, detection of the synchronizing signal f2 is used to establish a reference from which the sampling signals used by the circuitry shown in Figures 5 and 7 are generated.

Another difference in the track patterns of Figures 8 and 9 is that the longitudinal dimension, or length l1 of the area in which the pilot signal f1 is recorded in Figure 9 is less than the displacement GL. This means that when the leading head HL reaches the position t20 at the beginning of the synchronizing signal f2 in scanning the track L21, the trailing head HT reaches the position t20' opposite the pilot signal f1 recorded in the track L22 adjacent to the track T21 scanned by the trailing head HT. At the position t20' the cross-talk pilot signal f1 will be picked up by the trailing head HT only from the adjacent track L22 and not from the adjacent track L21. This is because the pilot signal is not recorded in the track L21 adjacent to the position t20'. If, however, the length l1 of the area in which the pilot signal f1 is recorded in the track L21 is greater than the displacement GL, it is possible that when the leading head HL reaches the position t20 (and, thus, the trailing head HT reaches the position t20'), the pilot signals will be recorded in both the tracks L21 and L22 on opposite sides of the trailing head HT. Consequently, the level of the cross-talk pilot signal which is picked up by the trailing head HT would include a component from the adjacent track L22 as well as a component from the adjacent track L21 and, thus, the detection of the level of this cross-talk pilot signal will not provide an accurate indication of any deviation of the trailing head HT from the centre line of the track T21. But, by limiting the length l1 of the area in which the pilot signal is recorded, the head HT picks up the cross-talk pilot signal from only one adjacent track when the head HL reaches the position t20 (and the head HT reaches the position t20').

Of course, at a predetermined time following the sensing of the synchronizing signal f2 by the head HL, the trailing head HT reaches the position t21 whereat the pilot signal f1 is recorded in only one track adjacent to the trailing track T21 (that is, only in the adjacent track L21). Thus, when the track pattern shown in Figure 9 is used with the tracking control circuitry shown in Figures 5 and 7, the level of the cross-talk pilot signal picked up from the adjacent track L22 at the position t20' is compared with the level of the cross-talk pilot signal picked up from the adjacent track L21 at the position t21; and any difference therebetween is indicative of the tracking error of the heads HL and HT. It is recognized that, when used with the Figure 9 track pattern, the delay imparted by the delay circuit 24 following the detection by the head HL of the synchronizing signal f2 is minimal.

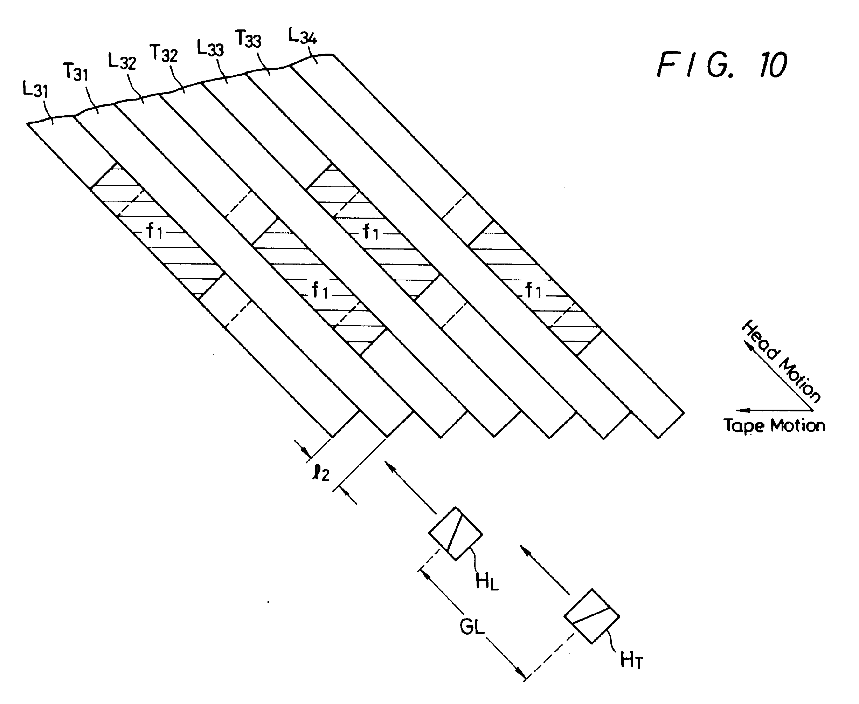

Yet another track pattern that may be used is illustrated in Figure 10. Like the patterns described above, tracking information signals are recorded in alternate tracks L31, L32, etc., as pilot signals f1. Preferably, the pilot signals are recorded in areas having substantially equal length; but because of minor irregularities during a recording operation, the pilot signals may not be recorded in precisely the same location in each track. Rather, the pilot signals may be recorded in areas which are shifted longitudinally, as indicated by the overlap between the cross-hatched section (which represents the recorded pilot signal) and the broken lines (which represent the same given location in each track). Thus, the pilot signals are displaced longitudinally forward and backward in those tracks in which they are recorded.

The tape speed and the rotary speed of the heads HL and HT are such that the beginning of each track appears to be shifted from the beginning of its preceding track by only a relatively small amount 12. Nevertheless, the length of the area in which each pilot signal is recorded is sufficient to assure good detection of a cross-talk pilot signal that may be picked up by the trailing head HT when it scans the respective trailing tracks T31, T32, etc.

Because of the forward and backward displacement of the pilot signals f1 recorded in the tracks L31, L32, etc., the pilot signal recorded in the track L32 (which is displaced backward) may be aligned with and substantially parallel to the pilot signal recorded in the track L33 (which is displaced forward). As a result, when the trailing head HT scans the track T32, it may pick up cross-talk pilot signal components concurrently from the tracks L32 and L33, both adjacent to the track T32. Such concurrent cross-talk pick-up of the pilot signal does not occur when the head HT scans the track T31 because the pilot signals f1 are shifted longitudinally with respect to each other in adjacent tracks L31 and L32, as illustrated. Whereas the level of the cross-talk pilot signal picked up from one adjacent track can be compared with the level of the cross-talk pilot signal picked up at a later time from the other adjacent track when the head HT scans the track T31, thus providing an indication of the deviation of the head from the centre line of the track T31, such comparison is not easily attained when the head scans the track T32. That is, the cross-talk pilot signal which is picked up by the head HT when the track T32 is scanned cannot be allocated accurately to the track L33 or to the track L32. Accordingly, the tracking control circuitry shown in Figures 5 and 7 can be modified such that only one sampling operation is carried out for every other track scan. That is, when the head HT scans the track T31 the sampling operation is performed, whereby the level of the pilot signal picked up from the track L32 is compared with the level of the pilot signal picked up from the track L31. But, when the head HT scans the track T32, the sample-and-hold circuits 35 and 36 are inhibited, and cross-talk pilot signals picked up from the tracks L33 and L32 are not sampled.

Although not shown in Figure 10, tracking information signals may be recorded in alternate tracks following the data area, whereby tracking control signals are produced before the data area is scanned (as is the case in the illustrated track pattern) and tracking control signals also are produced after the data areas are scanned.

Yet another track pattern that may be used is illustrated in Figure 11. This pattern is seen to be quite similar to that discussed above in conjunction with Figure 10; and additionally includes synchronizing signals f2 recorded in selected ones of the trailing tracks. More particularly, if the pilot signal f1 may be thought of as being recorded in successive leading tracks L41, L42, L43, etc., the synchronizing signals f2 may be thought of as being recorded in alternate trailing tracks T41, T43, etc. Furthermore, the synchronizing signals are recorded parallel to and in alignment with the pilot signal f1 recorded in a track adjacent thereto. As seen from Figure 11, the synchronizing signal f2 recorded in the trailing track T41 is aligned with the pilot signal f1 recorded in the adjacent leading track L42. Likewise, the synchronizing signal f2 recorded in the trailing track T43 is in alignment with the pilot signal f1 recorded in the adjacent leading track L44. It is appreciated that the synchronizing signals are recorded at the same time that the pilot signals are recorded, as when the heads HT and HL scan their respective tracks.

When the track pattern shown in Figure 11 is used, the detection of the synchronizing signal f2 by the trailing head HT serves to identify the track being scanned (as mentioned above, only alternate ones of the trailing tracks contain the synchronizing signal). Furthermore, the times at which the sampling pulses are generated may be referenced to the time at which the trailing head HT detects the synchronizing signal f2. For example, a pulse similar to the detection pulse shown in Figure 6B may be produced when the synchronizing signal is detected; and then the sampling pulses shown in Figures 6C and 6D may be produced at the times ta and tb following this detection pulse. Consequently, when the head HT scans the track T41, the level of the cross-talk pilot signal picked up from the track L42 is sensed at the time ta following the detection of the synchronizing signal f2, and the level of the cross-talk pilot signal picked up from the track L41 is sensed at the later time tb. By comparing the sensed levels of the cross-talk pilot signals picked up from adjacent tracks L42 and L41, the deviation of the head HT and thus the deviation of the head HL, from the centre line of the track being scanned thereby may be determined.

Of course, when the head HT scans the track T42 in which no synchronizing signal is recorded, this track is identified by the absence of such a synchronizing signal. It is appreciated that the scanning of the track T42 by the head HT is substantially the same as the aforedescribed scanning of the track T32 by the head HT, shown in Figure 10. Accordingly, when the track T42 is scanned, tracking errors may be determined in the same manner as has been discussed previously. In the interest of brevity, the description set forth in conjunction with Figure 10 is not repeated here. However, the tracking control circuitry shown in Figures 5 and 7 may be modified to accommodate the track patterns shown in Figure 11 as follows. A frequency detector 38 may be coupled to the output of the band-pass filter 32 to detect when the head HT senses the synchronizing signal f2, and the detection of the synchronizing signal f2 is then used to enable the aforedescribed operation of the sample-and-hold circuits 34 and 36 as shown in Figures 5A and 7A. In the absence of detecting the synchronizing signal f2, as when the head HT scans the track T42, one or the other, or both, the sample-and-hold circuits 34 and 36 may be inhibited from carrying out a new sampling operation and the previously sampled pilot signal may be re-used. For example, the previously sampled difference in the pilot signals picked up from the tracks L42 and L41 may be used once again to control tracking when the tracks T42 and L42 are scanned.

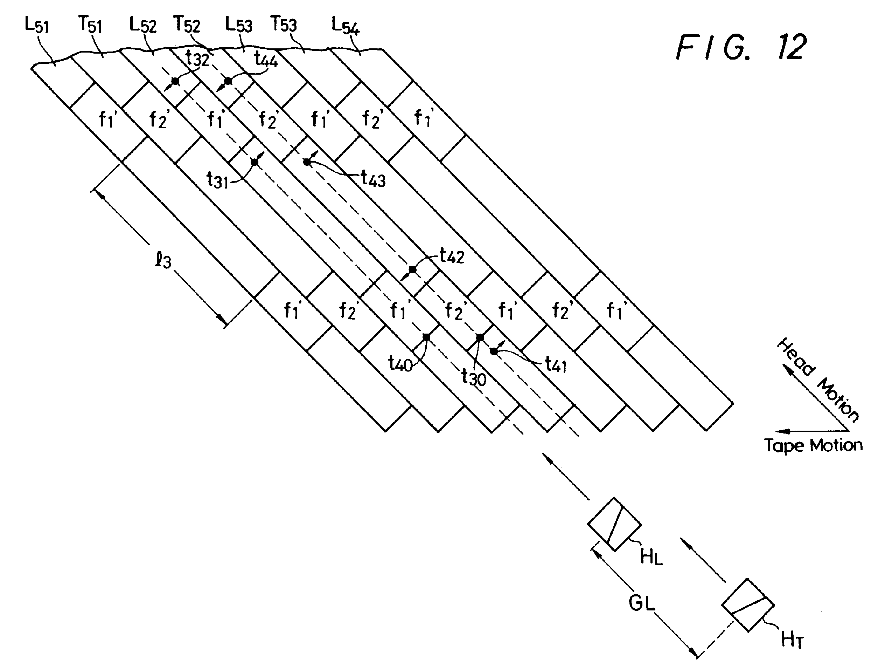

A still further example of a track pattern that may be used is illustrated in Figure 12. In this example, pilot signals are recorded in successive tracks L51, T51, L52, T52, and so on. Furthermore, the pilot signal is recorded in two discrete areas in each track, those two areas being longitudinally spaced apart by a predetermined interval 13. The pilot signal recorded by the leading head HL admits of a frequency f1' and the pilot signal recorded by the trailing head HT admits of a frequency f2'. These frequencies are such that they are not significantly attenuated by azimuth loss and, thus the pilot signal recorded with the azimuth of one head may be picked up as a cross-talk pilot signal by the other head.

When the tracking control circuits shown in Figures 5 and 7 are used to scan the tracks having the recorded track pattern shown in Figure 12, the sensing by the leading head HL of the pilot signal f1' in, for example, the track L52 occurs at the position t40. At a predetermined time following the detection of this pilot signal, the trailing head HT arrives at the position t41 along the track T52. The level of the cross-talk pilot signal f1' picked up by the head HT from the adjacent track L53 is sensed at this time; and at a later time the head HT reaches the position t42 and the level of the cross-talk pilot signal f1' picked up from the adjacent track L52 is sensed and compared with the previously sensed pilot signal level. As is appreciated from the description of Figures 5 and 7, any difference between the sensed cross-talk pilot signal levels is indicative of a tracking error of the heads HL and HT.

In accordance with the preceding description, the sensing of the pilot signal f1' by the leading head HL is used to establish time delays for generating sampling pulses when the head HT reaches the positions t41 and t42, respectively. Alternatively, since pilot signals are recorded in two separate spaced apart locations along each track, the sensing of the pilot signal f1' by the leading head HL may establish time delays for generating sampling pulses when the trailing head HT reaches the positions t43 and t44, respectively. Thus, rather than sensing the cross-talk pilot signals at the leading edge of the interval 13, the timing relationship established by the sensing of the pilot signal f1' by the head HL may result in the sensing of the cross-talk pilot signals recorded at the trailing edge of the interval 13.

In the foregoing description of Figure 12, the pilot signals f1' are sensed by the leading head HL to establish the proper timing relationship at which sampling pulses are generated, and these pilot signals are detected as cross-talk components by the trailing head HT to determine tracking error. Alternatively, the pilot signals f2' may be detected for the same purpose. For example, when the head HT scans the track T52, the sensing of the pilot signal f2' at the position t30 generates a detection pulse such as that shown in Figure 6B. At a later time ta, the leading head HL reaches the position t31 in the adjacent track L52. The leading head HL now is opposite the pilot signal f2' in the adjacent track T52; and the sampling pulse shown in Figure 6C is generated to sense the level of the cross-talk pilot signal f2'. At a later time tb, the leading head HL reaches the position t32 opposite the pilot signal f2' in the adjacent track T51. Now, the sampling pulse shown in Figure 6D is generated such that the level of the cross-talk pilot signal f2' in the track T51 is sensed and compared with the previously sensed cross-talk pilot signal. Any difference therebetween is indicative of the tracking error of the head HL.

Thus, when the track pattern shown in Figure 12 is used, the pilot signals f1' or the pilot signals f2' may be used to establish the proper timing relationship for sensing level differences between cross-talk pilot signals, thus providing an indication of tracking errors. Alternatively, an accurate tracking error indication may be provided by carrying out the sampling and comparison operation when the heads HL and HT scan the pilot signals which precede the interval 13 and also when the heads HL and HT scan the pilot signals that follow the interval 13. For example, when the head HL reaches the position t40, the pilot signals picked up by the head HT at the positions t41 and t42 may be sensed and compared. While the head HT scans the track T52, for example, its arrival at the position t30 may be used to sense the level of the cross-talk pilot signal f2' picked up by the head HL when it reaches the positions t31 and t32, respectively. Thus, as the illustrated segment of the tape 11 is scanned, two separate tracking error detecting operations are carried out, one by the picking up of cross-talk pilot signals by the head HT and the other by the picking up of cross-talk pilot signals by the head HL.

Although the invention has been described for the case of rotary heads used to scan oblique tracks across magnetic tape, the invention is equally applicable to stationary heads which scan parallel circular tracks on a record medium, such as tracks on a magnetic or optical disc. In magnetic and optical disc devices, servo mechanisms are used to detect and correct tracking errors, and the invention may be employed with such servo mechanisms.

## Claims

1. Apparatus for producing tracking control signals indicative of a tracking error of transducer means scanning parallel tracks recorded side-by-side without guard bands on a record medium, at least alternate ones of said tracks containing tracking information signals recorded therein in predetermined areas, said apparatus comprising:
first and second heads (HL, HT) mounted in said transducer means; and
output means responsive to sensed tracking information signal levels to produce a tracking control signal;
characterized in that:
said first and second heads (HL, HT) are mounted adjacent to one another and displaced from each other in a direction substantially parallel to said tracks, said first and second heads (HL, HT) also being offset from each other in a direction substantially transverse to said tracks so that while said first head (HL) scans a first track (L11) said second head (HT) concurrently scans an adjacent second track (T11) and picks up the tracking information signals of said first track (L11) and of a third track (L12);
sensing means (34 to 36) senses the levels of said tracking information signals picked up by said second head (HT);
timing means (21 to 25) is responsive to tracking information signals picked up by said first head (HL) for establishing times at which said levels of said tracking information signals picked up by said second head (HT) are sensed; and
output means produces said tracking control signal in dependence on a comparison of said sensed levels of said tracking information signals picked up by said second head (HT).

2. Apparatus according to claim 1 wherein said sensing means (34 to 36) comprises a first sensor (34) operable at a first time to sense a tracking information signal picked up by said second head (HT) from the first track (L11) adjacent to the second track (T11) being scanned by said second head (HT), and a second sensor (36) operable at a second time to sense the difference between the tracking information signal sensed at said first time and a tracking information signal picked up by said second head (HT) from the third track (L12) adjacent to the second track (T11) being scanned by said second head (HT); and said timing means (21 to 25) is operable to establish said first and second times.

3. Apparatus according to claim 2 wherein said second sensor (36) includes comparator means (35) for comparing the tracking information signals sensed at said first and second times to produce a tracking control signal as a function of the difference therebetween.

4. Apparatus according to claim 3 wherein said timing means (21 to 25) comprises sampling pulse generating means (21 to 25) for generating sampling pulses at said first and second times.

5. Apparatus according to claim 4 wherein said sampling pulse generating means (21 to 25) comprises delay means (24, 25) for generating said sampling pulses at said first and second times following the detection of a tracking information signal picked up by said first head (HL).

6. Apparatus according to claim 4 wherein said first sensor (34) comprises first sample-and-hold means (34) responsive to a sampling pulse at said first time to sample the tracking information signal picked up from the first track (L11); and said second sensor (36) comprises comparator means (35) for comparing the sampled tracking information signal with the tracking information signal picked up from the third track (L12), and second sample-and-hold means (36) responsive to a sampling pulse at said second time to sample the difference produced by said comparator means (35).

7. Apparatus according to claim 4 wherein said first sensor (34) comprises first sample-and-hold means (34) responsive to a sampling pulse at said first time to sample the tracking information signal picked up from the first track (L11); and said second sensor (36) comprises second sample-and-hold means (36) responsive to a sampling pulse at said second time to sample the tracking information signal picked up from the third track (L12), and comparator means (35) for comparing the samples produced by said first and second sample-and-hold means (34, 36).

8. Apparatus according to any one of claims 4 to 7 wherein said tracking information signals include synchronizing signals and pilot signals, said synchronizing signals being picked up by said first head (HL); and wherein said sampling pulse generating means (21 to 25) comprises means for generating said sampling pulses at first and second predetermined times following detection of said synchronizing signals.

9. Apparatus according to claim 8 wherein said synchronizing signals are recorded in leading relation to said pilot signals.

10. Apparatus according to claim 8 wherein said synchronizing signals are recorded in trailing relation to said pilot signals.

11. Apparatus according to claim 4 wherein synchronizing signals are recorded in alternate ones of those tracks which do not contain tracking information signals, said synchronizing signals being picked up by said second head (HT); and wherein said sampling pulse generating means (21 to 25) comprises means for generating said sampling pulses at first and second predetermined times following detection of said synchronizing signals.

12. Apparatus according to claim 1 wherein said sensing means (34 to 36) comprises a sensor (34) actuable to sense a tracking information signal picked up by said second head (HT) from a track adjacent to the track scanned by said second head (HT); sampling means (36) for sampling the signal picked up by said second head (HT) at a sampling time referenced to the detection of tracking information signals picked up by said first head (HL), thereby producing a sampled signal; and level sensing means (35) for sensing the level of said sampled signal and for producing said tracking control signal as a function of the sensed level.

13. Apparatus according to any one of the preceding claims wherein said data tracks are oblique tracks across said record medium (11); and said first and second heads (HL, HT) comprise rotary heads (HL, HT), a rotary drum (10) for supporting said heads (HL, HT) and for rotating them across said record medium (11), said heads (HL, HT) being spaced apart in the axial direction of said drum (10) and angularly displaced from each other in the rotational direction of said drum (10).

14. Apparatus according to any one of the preceding claims wherein the offset of said first and second heads (HL, HT) is substantially equal to the pitch of said data tracks.

15. Apparatus according to any one of the preceding claims wherein at least one of said first and second heads (HL, HT) has a width greater than the width of the tracks scanned thereby.

16. A method of producing tracking control signals indicative of a tracking error of transducer means comprising first and second heads (HL, HT) scanning parallel tracks recorded side-by-side without guard bands on a record medium, at least alternate ones of said tracks containing tracking information signals recorded therein in predetermined areas, by sensing tracking information signal levels to produce a tracking control signal;
characterized in that:
said first and second heads (HL, HT) are mounted adjacent to one another in said transducer means and displaced from each other in a direction substantially parallel to said tracks, said first and second heads (HL, HT) also being offset from each other in a direction substantially transverse to said tracks so that while said first head (HL) scans a first track (L11) said second head (HT) concurrently scans an adjacent second track (T11) and picks up the tracking information signals of said first track (L11) and of a third track (L12);
the levels of said tracking information signals picked up by said second head (HT) are sensed;
times at which said levels of said tracking information signals picked up by said second head (HT) are sensed are established responsive to tracking information signals picked up by said first head (HL); and
said tracking control signal is produced in dependence on a comparison of said sensed levels of said tracking information signals picked up by said second head (HT).

17. A method according to claim 16 wherein said step of producing a tracking control signal comprises sensing at a first time a tracking information signal picked up by said second head (HT) from the first track (L11) adjacent to the second track (L11) being scanned by said second head (HT), sensing at a second time a tracking information signal picked up by said second head (HT) from the third track (L12) adjacent to the second track (T11) being scanned by said second head (HT), and responding to a tracking information signal picked up by said first head (HL) from the first track (L11) being scanned by said first head (HL) to determine said first and second times.

18. A method according to claim 17 wherein the steps of sensing at first and second times comprise sampling the tracking information signal picked up from the first and third tracks (L11, L12) at said first and second times, respectively, with sampling pulses generated at said first and second times in response to the detected tracking information signal picked up by said first head (HL).

19. A method according to claim 18 wherein said step of producing a tracking control signal further comprises comparing the sampled tracking information signals and producing a tracking control signal as a function of the difference therebetween.

20. A method according to claim 18 wherein the sampling pulses are generated by providing first and second predetermined time delays following the detection of a tracking information signal picked up by said first head (HL) to generate first and second sampling pulses, respectively.

21. A method according to claim 16 wherein said step of producing a tracking control signal comprises sensing at a first time a tracking information signal picked up by said second head (HT) from the first track (L11) adjacent to the second track (T11) being scanned by said second head (HT), comparing the tracking information signal picked up from the first track (L11) at said first time with the detected tracking information signal picked up by said second head (HT) at said second time, and responding to a tracking information signal picked up by said first head (HL) from the first track (L11) being scanned by said first head (HL) to determine said first and second times.

22. A method according to claim 16 wherein said tracking information signals include synchronizing signals and pilot signals, said synchronizing signals being picked up by said second head (HT); and wherein said tracking control signal is produced by comparing pilot signal levels picked up by said first head (HL) at first and second times following detection of said synchronizing signals.

23. A method according to claim 22 wherein said synchronizing signals are recorded in leading relation to said pilot signals.

24. A method according to claim 22 wherein said synchronizing signals are recorded in trailing relation to said pilot signals.

25. A method according to claim 16 wherein synchronizing signals are recorded in alternate ones of those tracks which do not contain tracking information signals, said synchronizing signals being picked up by said second head (HT); and wherein said tracking control signal is produced by comparing levels of tracking information signals picked up by said second head (HT) at first and second times following detection of said synchronizing signals.

26. A method according to claim 16 wherein said step of producing a tracking control signal comprises sensing a tracking information signal picked up by said second head (HT) from the first track (L11) adjacent to the second track (T11) scanned by said second head (HT); sampling the signal picked up by said second head (HT) at a sampling time referenced to the detection of tracking information signals picked up by said first head (HL), thereby producing a sampled signal; sensing the level of said sampled signal; and producing said tracking control signal as a function of the sensed level.

27. A method according to any one of claims 16 to 26 wherein said data tracks are oblique tracks across said record medium (11); and said first and second heads (HL, HT) are mounted on a rotary drum (10), said heads (HL, HT) being spaced apart in the axial direction of said drum (10) and angularly displaced from each other in the rotational direction of said drum (10).

28. A method according to any one of claims 16 to 27 wherein the offset of said first and second heads (HL, HT) is substantially equal to the pitch of said data tracks.

## Patentansprüche

1. Vorrichtung zur Erzeugung von Spurregelsignalen, die kennzeichnend sind für den Spurfehler einer Wandlereineinrichtung, die parallele Spuren abtastet, die ohne Sicherheitsband seitlich nebeneinander auf einem Aufzeichnungsmedium aufgezeichnet sind, wobei zumindest abwechselnde Exemplare dieser Spuren Spurführungsinformationssignale enthalten, die in vorbestimmten Bereichen dieser Spuren aufgezeichnet sind,
mit einem ersten und einem zweiten Kopf (HL, HT), die in der Wandlereineinrichtung montiert sind,
sowie mit auf die Pegel von erfaßten Spurführungsinformationssignalen ansprechenden Ausgangsmitteln zur Erzeugung eines Spurregelsignals,
**dadurch gekennzeichnet,**
daß der erste und der zweite Kopf (HL, HT) einander benachbart und sowohl in einer zu den Spuren im wesentlichen parallelen Richtung als auch in einer im wesentlichen quer zu den Spuren verlaufenden Richtung derart gegeneinander versetzt sind, daß in der Zeit, in der der erste Kopf (HL) eine erste Spur (L11) abtastet, der zweite Kopf (HT) gleichzeitig eine benachbarte zweite Spur (T11) abtastet und die Spurführungsinformationssignale der ersten Spur (L11) und einer dritten Spur (L12) aufnimmt,
daß eine Sensoreinrichtung (34 bis 36) die Pegel der von dem zweiten Kopf (HT) aufgenommenen Spurführungsinformationssignale erfaßt,
daß eine Zeitgebereinrichtung (21 bis 25) in Abhängigkeit von den von dem ersten Kopf (HL) aufgenommenen Spurführungsinformationssignale Zeitlagen erzeugt, in denen die Sensoreinrichtung die Pegel der von dem zweiten Kopf (HT) aufgenommenen Spurführungsinformationssignale erfaßt,
und daß die genannten Ausgangsmittel das Spurregelsignal in Abhängigkeit von einem Vergleich der erfaßten Pegel der von dem zweiten Kopf (HT) aufgenommenen Spurführungsinformationssignale erzeugen.

2. Vorrichtung nach Anspruch 1, bei der die Sensoreinrichtung (34 bis 36) einen ersten Sensor (34) aufweist, der in einer ersten Zeitlage ein Spurführungsinformationssignal erfaßt, das der zweite Kopf (HT) von der ersten Spur (L11) aufnimmt, die der zweiten Spur (T11) benachbart ist, die von dem zweiten Kopf (HT) abgetastet wird, sowie einen zweiten Sensor (36), der in einer zweiten Zeitlage die Differenz zwischen dem in der ersten Zeit erfaßten Spurführungsinformationssignal und einem Spurführungsinformationssignal erfaßt, das der zweite Kopf (HT) von der dritten Spur (L12) aufnimmt, die der von dem zweiten Kopf (HT) abgetasteten zweiten Spur (T11) benachbart ist, wobei die erste und die zweite Zeitlage von der genannten Zeitgebereinrichtung (21 bis 25) erzeugt werden.

3. Vorrichtung nach Anspruch 2, bei der der zweite Sensor (36) eine Komparatoreinrichtung (35) zum Vergleichen der in der ersten und in der zweiten Zeitlage erfaßten Spurführungsinformationssignale und zur Erzeugung eines Spurregelsignals als Funktion der Differenz der Spurführungsinformationssignale aufweist.

4. Vorrichtung nach Anspruch 3, bei der die Zeitgebereinrichtung (21 bis 25) einen Abtastimpulsgenerator (21 bis 25) aufweist, der Abtastimpulse in der ersten und der zweiten Zeitlage erzeugt.

5. Vorrichtung nach Anspruch 4, bei der der Abtastimpulsgenerator (21 bis 25) Verzögerungsmittel (24, 25) aufweist, um die Abtastimpulse mit der ersten und der zweiten Zeitlage im Anschluß an die Detektierung eines von dem ersten Kopf (HL) aufgenommenen Spurführungsinformationssignals zu erzeugen.

6. Vorrichtung nach Anspruch 4, bei der der erste Sensor (34) eine erste Abtast- und Halteeinrichtung (34) umfaßt, die auf einen mit der genannten ersten Zeitlage auftretenden Abtastimpuls anspricht und das von der ersten Spur (L11) aufgenommene Spurführungsinformationssignal abtastet, und bei der der zweite Sensor (36) eine Komparatoreinrichtung (35) umfaßt, die das abgetastete Spurführungsinformationssignal mit dem von der dritten Spur (L12) aufgenommenen Spurführungsinformationssignal vergleicht, sowie eine zweite Abtast- und Halteeinrichtung (36), die auf einen mit der genannten zweiten Zeitlage auftretenden Abtastimpuls anspricht und die von der Komparatoreinrichtung (35) erzeugte Differenz abtastet.

7. Vorrichtung nach Anspruch 4, bei der der erste Sensor (34) eine erste Abtast- und Halteeinrichtung (34) umfaßt, die auf einen mit der genannten ersten Zeitlage auftretenden Abtastimpuls anspricht und das von der ersten Spur (L11) aufgenommene Spurführungsinformationssignal abtastet, und bei der der zweite Sensor (36) eine zweite Abtast- und Halteeinrichtung (36) umfaßt, die auf einen mit der genannten zweiten Zeitlage auftretenden Abtastimpuls anspricht und das von der dritten Spur (L12) aufgenommenen Spurführungsinformationssignal abtastet, sowie eine Komparatoreinrichtung (35), die die von der ersten und der zweiten Abtast- und Halteeinrichtung (34, 36) erzeugten Abtastproben miteinander vergleicht, .

8. Vorrichtung nach einem der Ansprüche 4 bis 7, bei der die Spurführungsinformationssignale Synchronisiersignale und Pilotsignale enthalten, wobei die Synchronisiersignale von den dem ersten Kopf (HL) aufgenommen werden, und bei der der Abtastimpulsgenerator (21 bis 25) Mittel aufweist zur Erzeugung der Abtastimpulse in einer ersten und in einer zweiten vorbestimmten Zeitlage im Anschluß an die Detektierung der Synchronisiersignale.

9. Vorrichtung nach Anspruch 8, bei der die Synchronisiersignale vor den Pilotsignalen aufgezeichnet sind.

10. Vorrichtung nach Anspruch 8, bei der die Synchronisiersignale hinter den Pilotsignalen aufgezeichnet sind.

11. Vorrichtung nach Anspruch 4, bei der in abwechselnden Exemplaren der Spuren, die keine Spurführungsinformationssignale enthalten, Synchronisiersignale aufgezeichnet sind, die von dem zweiten Kopf (HT) aufgenommen werden, und bei der der Abtastimpulsgenerator (21 bis 25) Mittel aufweist zur Erzeugung der Abtastimpulse mit einer ersten und in einer zweiten vorbestimmten Zeitlage im Anschluß an die Detektierung der Synchronisiersignale.

12. Vorrichtung nach Anspruch 1, bei der die Sensoreinrichtung (34 bis 36) folgende Teile umfaßt: einen Sensor (34), der so aktivierbar ist, daß er ein Spurführungsinformationssignal erfaßt, das der zweite Kopf (HT) von einer Spur aufnimmt, die der von dem zweiten Kopf (HT) abgetasteten Spur benachbart ist, ferner eine Abtasteinrichtung (36), die das von dem zweiten Kopf (HT) aufgenommene Signal in einem auf die Detektierung von durch den ersten Kopf (HL) aufgenommenen Spurführungsinformationssignalen bezogenen Abtastzeitpunkt abtastet und ein entsprechendes Abtastsignal erzeugt, sowie eine Pegelsensoreinrichtung (35) zur Erfassung des Pegel dieses Abtastsignals und zur Erzeugung des Spurregelsignals als Funktion des erfaßten Pegels.

13. Vorrichtung nach einem der vorhergehenden Ansprüche, bei der die genannten Datenspuren Schrägspuren sind, die quer zu dem Aufzeichnungsmedium (11) verlaufen, und bei der der erste und der zweite Kopf (HL, HT) rotierende Köpfe (HL, HT) sowie eine rotierende Trommel (10) zur Halterung der Köpfe (HL, HT) und zum Drehen der Köpfe quer über das Aufzeichnungsmedium (11) umfassen, wobei die Köpfe (HL, HT) in axialer Richtung der Trommel (10) Abstand voneinander haben und in Rotationsrichtung der Trommel (10) winkelversetzt sind.

14. Vorrichtung nach einem der vorhergehenden Ansprüche, bei der der Versatz des ersten und des zweiten Kopfes (HL, HT) im wesentlichen gleich dem Abstand der Datenspuren ist.

15. Vorrichtung nach einem der vorhergehenden Ansprüche, bei der wenigstens einer der beiden Köpfe (HL, HT) eine größere Breite besitzt als die von ihm abgetasteten Spuren.

16. Verfahren zur Erzeugung von Spurregelsignalen, die kennzeichnend sind für den Spurfehler einer einen ersten und einen zweiten Kopf (HL, HT) aufweisenden Wandlereineinrichtung, die parallele Spuren abtastet, die ohne Sicherheitsband seitlich nebeneinander auf einem Aufzeichnungsmedium aufgezeichnet sind, wobei zumindest abwechselnde Exemplare dieser Spuren Spurführungsinformationssignale enthalten, die in vorbestimmten Bereichen dieser Spuren aufgezeichnet sind,
durch Erfassen der Pegel der Spurführungsinformationssignale zur Erzeugung eines Spurregelsignals,
**dadurch gekennzeichnet,**
daß der erste und der zweite Kopf (HL, HT) in der Wandlereineinrichtung einander benachbart montiert und sowohl in einer zu den Spuren im wesentlichen parallelen Richtung als auch in einer im wesentlichen quer zu den Spuren verlaufenden Richtung derart gegeneinander versetzt sind, daß in der Zeit, in der der erste Kopf (HL) eine erste Spur (L11) abtastet, der zweite Kopf (HT) gleichzeitig eine benachbarte zweite Spur (T11) abtastet und die Spurführungsinformationssignale der ersten Spur (L11) und einer dritten Spur (L12) aufnimmt,
daß die Pegel der von dem von dem zweiten Kopf (HT) aufgenommenen Spurführungsinformationssignale erfaßt werden,
daß die Zeiten, in denen die Pegel der von dem zweiten Kopf (HT) aufgenommenen Spurführungsinformationssignale erfaßt werden, in Abhängigkeit von durch den ersten Kopf (HL) aufgenommenen Spurführungsinformationssignalen bestimmt werden,
und daß das Spurregelsignal in Abhängigkeit von einem Vergleich der erfaßten Pegel der von dem zweiten Kopf (HT) aufgenommenen Spurführungsinformationssignale erzeugen.

17. Verfahren nach Anspruch 16, bei der Verfahrensschritt der Erzeugung eines Spurregelsignals beinhaltet, daß in einer ersten Zeitlage ein Spurführungsinformationssignal erfaßt wird, das der zweite Kopf (HT) von der ersten Spur (L11) aufnimmt, die der zweiten Spur (T11) benachbart ist, die von dem zweiten Kopf (HT) abgetastet wird, und daß in einer zweiten Zeitlage ein Spurführungsinformationssignal erfaßt wird, das der zweite Kopf (HT) von der dritten Spur (L12) aufnimmt, die der zweiten Spur (T11) benachbart ist, die von dem zweiten Kopf (HT) abgetastet wird, und daß die erste und die zweite Zeitlage nach Maßgabe eines Spurführungsinformationssignals festgelegt werden, das der erste Kopf (HL) von der ersten Spur (L11) aufnimmt, die von dem ersten Kopf (HL) abgetastet wird.

18. Verfahren nach Anspruch 18, bei dem die Verfahrensschritte des Erfassens der Spurführungsinformationssignale in der ersten und der zweiten Zeitlage beinhalten, daß das von der ersten bzw. der dritten Spur (L11, L12) in der ersten bzw. der zweiten Zeitlage aufgenommene Spurführungsinformationssignal mit Abtastimpulsen abgetastet wird, die in Abhängigkeit von dem von dem ersten Kopf (HL) aufgenommenen detektierten Spurführungsinformationssignal in der ersten und der zweiten Zeitlage erzeugt werden.

19. Verfahren nach Anspruch 18, bei dem der Verfahrensschritt der Erzeugung eines Spurregelsignals ferner das Vergleichen der abgetasteten Spurführungsinformationssignale beinhaltet und das Erzeugen eines Spurregelsignals als Funktion der Differenz zwischen den abgetasteten Spurführungsinformationssignalen.

20. Verfahren nach Anspruch 18, bei dem die Abtastimpulse erzeugt werden, indem im Anschluß an die Detektierung eines von dem ersten Kopf (HL) aufgenommenen Spurführungsinformationssignals eine erste und eine zweite vorbestimmte Zeitverzögerung vorgesehen wird, um erste bzw. zweite Abtastimpulse zu erzeugen.

21. Verfahren nach Anspruch 16, bei dem der Verfahrensschritt der Erzeugung eines Spurregelsignals beinhaltet, daß in einer ersten Zeitlage ein Spurführungsinformationssignal erfaßt wird, das der zweite Kopf (HT) von ersten Spur (L11) aufnimmt, die der von dem zweiten Kopf (HT) abgetasteten zweiten Spur (T11) benachbart ist, daß das in der genannten ersten Zeitlage von der ersten Spur (L11) aufgenommene Spurführungsinformationssignal mit dem erfaßten Spurführungsinformationssignal verglichen wird, das durch den zweiten Kopf (HT) in der zweiten Zeitlage aufgenommen wird, und daß die erste und die zweite Zeitlage nach Maßgabe eines Spurführungsinformationssignals festgelegt werden, das der erste Kopf (HL) von der ersten Spur (L11) aufnimmt, die von dem ersten Kopf (HL) abgetastet wird.

22. Verfahren nach Anspruch 16, bei dem die Spurführungsinformationssignale Synchronisiersignale und Pilotsignale enthalten, wobei die Synchronisiersignale von dem ersten Kopf (HL) aufgenommen werden, und bei dem das Spurregelsignal durch Vergleichen der Pegel der Pilotsignale erzeugt wird, die der erste Kopf (HL) in einer ersten und einer Zeitlage im Anschluß an die Detektierung der Synchronisiersignale aufnimmt.

23. Verfahren nach Anspruch 22, bei dem die Synchronisiersignale vor den Pilotsignalen aufgezeichnet werden.

24. Verfahren nach Anspruch 22, bei dem die Synchronisiersignale hinter den Pilotsignalen aufgezeichnet werden.

25. Vorrichtung nach Anspruch 16, bei dem in abwechselnden Exemplaren der Spuren, die keine Spurführungsinformationssignale enthalten, Synchronisiersignale aufgezeichnet werden, die von dem zweiten Kopf (HT) aufgenommen werden, und bei dem das Spurregelsignal durch Vergleichen der Pegel der Spurführungsinformationssignale erzeugt wird, die der zweite Kopf (HT) in einer ersten und einer Zeitlage im Anschluß an die Detektierung der Synchronisiersignale aufnimmt.

26. Verfahren nach Anspruch 16, bei der Verfahrensschritt der Erzeugung eines Spurregelsignals beinhaltet, daß ein Spurführungsinformationssignal erfaßt wird, das von dem zweiten Kopf (HT) von der ersten Spur (L11) aufgenommen wurde, die der von dem zweiten Kopf (HT) abgetasteten Spur benachbart ist, daß das von dem zweiten Kopf (HT) aufgenommene Signal in einem auf die Detektierung von durch den ersten Kopf (HL) aufgenommenen Spurführungsinformationssignalen bezogenen Abtastzeitpunkt abgetastet und ein entsprechendes Abtastsignal erzeugt wird, daß der Pegel des Abtastsignals erfaßt wird und daß das Spurregelsignal als Funktion des erfaßten Pegels erzeugt wird.

27. Verfahren nach einem der Ansprüche 16 bis 26, bei dem die genannten Datenspuren Schrägspuren sind, die quer zu dem Aufzeichnungsmedium (11) verlaufen, und bei dem der erste und der zweite Kopf (HL, HT) rotierende Köpfe (HL, HT) sowie eine rotierende Trommel (10) zur Halterung der Köpfe (HL, HT) und zum Drehen der Köpfe quer über das Aufzeichnungsmedium (11) umfassen, wobei die Köpfe (HL, HT) in axialer Richtung der Trommel (10) Abstand voneinander haben und in Rotationsrichtung der Trommel (10) winkelversetzt sind.

28. Verfahren nach einem der Ansprüche 16 bis 27, bei dem der Versatz des ersten und des zweiten Kopfes (HL, HT) im wesentlichen gleich dem Abstand der Datenspuren ist.

## Revendications

1. Appareil de production de signaux de commande de suivi de piste indicatifs d'une erreur de suivi de piste d'un moyen de transducteur qui balaie des pistes parallèles enregistrées côte à côte sans bande de garde sur un support d'enregistrement, au moins certaines alternées desdites pistes contenant des signaux d'information de suivi de piste enregistrés en leur sein dans des zones prédéterminées, ledit appareil comprenant :
des première et seconde têtes (HL, HT) montées dans ledit moyen de transducteur ; et
un moyen de sortie sensible à des niveaux de signal d'information de suivi de piste détectés pour produire un signal de commande de suivi de piste,
caractérisé en ce que :
lesdites première et seconde têtes (HL, HT) sont montées de manière à être adjacentes l'une à l'autre et sont déplacées l'une par rapport à l'autre suivant une direction sensiblement parallèle auxdites pistes, lesdites première et seconde têtes (HL, HT) étant également décalées l'une par rapport à l'autre suivant une direction sensiblement transversale auxdites pistes de telle sorte que tandis que ladite première tête (HL) balaie une première piste (L11), ladite seconde tête (HT) balaie concurremment une seconde piste adjacente (T11) et capte les signaux d'information de suivi de piste de ladite première piste (L11) et d'une troisième piste (L12) ;
un moyen de détection (34 à 36) détecte les niveaux desdits signaux d'information de suivi de piste captés par ladite seconde tête (HT) ;
un moyen de cadencement (21 à 25) est sensible à des signaux d'information de suivi de piste captés par ladite première tête (HL) pour établir des instants auxquels lesdits niveaux desdits signaux d'information de suivi de piste captés par ladite seconde tête (HT) sont détectés ; et
un moyen de sortie produit ledit signal de commande de suivi de piste en fonction d'une comparaison desdits niveaux détectés desdits signaux d'information de suivi de piste captés par ladite seconde tête (HT).

2. Appareil selon la revendication 1, dans lequel ledit moyen de détection (34 à 36) comprend un premier détecteur (34) qui peut fonctionner à un premier instant pour détecter un signal d'information de suivi de piste capté par ladite seconde tête (HT) sur la première piste (L11) adjacente à la seconde piste (T11) qui est balayée par ladite seconde tête (HT), et un second détecteur (36) qui peut fonctionner à un second instant pour détecter la différence entre le signal d'information de suivi de piste détecté audit premier instant et un signal d'information de suivi de piste capté par ladite seconde tête (HT) sur la troisième piste (L12) adjacente à la seconde piste (T11) qui est balayée par ladite seconde tête (HT) ; et ledit moyen de cadencement (21 à 25) peut fonctionner pour établir lesdits premier et second instants.

3. Appareil selon la revendication 2, dans lequel ledit second détecteur (36) inclut un moyen de comparateur (35) pour comparer les signaux d'information de suivi de piste détectés auxdits premier et second instants afin de produire un signal de commande de suivi de piste en fonction de la différence entre eux.

4. Appareil selon la revendication 3, dans lequel ledit moyen de cadencement (21 à 25) comprend un moyen de génération d'impulsions d'échantillonnage (21 à 25) pour générer des impulsions d'échantillonnage auxdits premier et second instants.

5. Appareil selon la revendication 4, dans lequel ledit moyen de génération d'impulsions d'échantillonnage (21 à 25) comprend un moyen de retard (24, 25) pour générer lesdites impulsions d'échantillonnage auxdits premier et second instants qui suivent la détection d'un signal d'information de suivi de piste capté par ladite première tête (HL).

6. Appareil selon la revendication 4, dans lequel ledit premier détecteur (34) comprend un premier moyen échantillonneur/bloqueur (34) sensible à une impulsion d'échantillonnage audit premier instant pour échantillonner le signal d'information de suivi de piste capté sur la première piste (L11) ; et ledit second détecteur (36) comprend un moyen de comparateur (35) pour comparer le signal d'information de suivi de piste échantillonné au signal d'information de suivi de piste capté sur la troisième piste (L12) et un second moyen échantillonneur/bloqueur (36) sensible à une impulsion d'échantillonnage audit second instant pour échantillonner la différence produite par ledit moyen de comparateur (35).

7. Appareil selon la revendication 4, dans lequel ledit premier détecteur (34) comprend un premier moyen échantillonneur/bloqueur (34) sensible à une impulsion d'échantillonnage audit premier instant pour échantillonner le signal d'information de suivi de piste capté sur la première piste (L11) ; et ledit second détecteur (36) comprend un second moyen échantillonneur/bloqueur (36) sensible à une impulsion d'échantillonnage audit second instant pour échantillonner le signal d'information de suivi de piste capté sur la troisième piste (L12) et un moyen de comparateur (35) pour comparer les échantillons produits par lesdits premier et second moyens échantillonneur/bloqueur (34, 36).

8. Appareil selon l'une quelconque des revendications 4 à 7, dans lequel lesdits signaux d'information de suivi de piste incluent des signaux de synchronisation et des signaux pilotes, lesdits signaux de synchronisation étant captés par ladite première tête (HL) ; et dans lequel ledit moyen de génération d'impulsions d'échantillonnage (21 à 25) comprend un moyen pour générer lesdites impulsions d'échantillonnage à des premier et second instants prédéterminés qui suivent la détection desdits signaux de synchronisation.

9. Appareil selon la revendication 8, dans lequel lesdits signaux de synchronisation sont enregistrés à l'avance par rapport auxdits signaux pilotes.

10. Appareil selon la revendication 8, dans lequel lesdits signaux de synchronisation sont enregistrés en retard par rapport auxdits signaux pilotes.

11. Appareil selon la revendication 4, dans lequel des signaux de synchronisation sont enregistrés dans certaines alternées des pistes qui ne contiennent pas de signaux d'information de suivi de piste, lesdits signaux de synchronisation étant captés par ladite seconde tête (HT) ; et dans lequel ledit moyen de génération d'impulsions d'échantillonnage (21 à 25) comprend un moyen pour générer lesdites impulsions d'échantillonnage à des premier et second instants prédéterminés qui suivent la détection desdits signaux de synchronisation.

12. Appareil selon la revendication 1, dans lequel ledit moyen de détection (34 à 36) comprend un détecteur (34) qui peut être actionné pour détecter un signal d'information de suivi de piste capté par ladite seconde tête (HT) sur une piste adjacente à la piste balayée par ladite seconde tête (HT) ; un moyen d'échantillonnage (36) pour échantillonner le signal capté par ladite seconde tête (HT) à un instant d'échantillonnage référencé par rapport à la détection de signaux d'information de suivi de piste captés par ladite première tête (HL), en produisant ainsi un signal échantillonné ; et un moyen de détection de niveau (35) pour détecter le niveau dudit signal échantillonné pour produire ledit signal de commande de suivi de piste en fonction du niveau détecté.

13. Appareil selon l'une quelconque des revendications précédentes, dans lequel lesdites pistes de données sont des pistes obliques ménagées au travers dudit support d'enregistrement (11) ; et lesdites première et seconde têtes (HL, HT) comprennent des têtes tournantes (HL, HT), un tambour tournant (10) pour supporter lesdites têtes (HL, HT) et pour les mettre en rotation au travers dudit support d'enregistrement (11), lesdites têtes (HL, HT) étant espacées l'une de l'autre suivant la direction axiale dudit tambour (10) et étant déplacées angulairement l'une par rapport à l'autre suivant la direction de rotation dudit tambour (10).

14. Appareil selon l'une quelconque des revendications précédentes, dans lequel le décalage desdites première et seconde têtes (HL, HT) est sensiblement égal au pas desdites pistes de données.

15. Appareil selon l'une quelconque des revendications précédentes, dans lequel au moins l'une desdites première et seconde têtes (HL, HT) présente une largeur supérieure à la largeur desdites pistes ainsi balayées.

16. Procédé de production de signaux de commande de suivi de piste indicatifs d'une erreur de suivi de piste d'un moyen de transducteur comprenant des première et seconde têtes (HL, HT) qui balaient des pistes parallèles enregistrées côte à côte sans bande de garde sur un support d'enregistrement, au moins certaines alternées desdites pistes contenant des signaux d'information de suivi de piste enregistrés en leur sein dans des zones prédéterminées, en détectant des niveaux d'un signal d'information de suivi de piste pour produire un signal de commande de suivi de piste,
caractérisé en ce que :
lesdites première et secondes têtes (HL, HT) sont montées de manière à être adjacentes l'une à l'autre lesdites première et seconde têtes (HL, HT) sont montées de manière à être adjacentes l'une à l'autre et sont déplacées l'une par rapport à l'autre suivant une direction sensiblement parallèle auxdites pistes, lesdites première et seconde têtes (HL, HT) étant également décalées l'une par rapport à l'autre suivant une direction sensiblement transversale auxdites pistes de telle sorte que tandis que ladite première tête (HL) balaie une première piste (L11), ladite seconde tête (HT) balaie concurremment une seconde piste adjacente (T11) et capte les signaux d'information de suivi de piste de ladite première piste (L11) et d'une troisième piste (L12)
les niveaux desdits signaux d'information de suivi de piste captés par ladite seconde tête (HT) sont détectés ;
des instants auxquels lesdits niveaux desdits signaux d'information de suivi de piste captés par ladite seconde tête (HT) sont détectés sont établis en réponse à des signaux d'information de suivi de piste captés par ladite première tête (HL) ; et
ledit signal de commande de suivi de piste est produit en fonction d'une comparaison desdits niveaux détectés desdits signaux d'information de suivi de piste captés par ladite seconde tête (HT).

17. Procédé selon la revendication 16, dans lequel ladite étape de production d'un signal de commande de suivi de piste comprend une détection à un premier instant d'un signal d'information de suivi de piste capté par ladite seconde tête (HT) sur la première piste (L11) adjacente à la seconde piste (T11) qui est balayée par ladite seconde tête (HT), une détection à un second instant d'un signal d'information de suivi de piste capté par ladite seconde tête (HT) sur la troisième piste (L12) adjacente à la seconde piste (T11) qui est balayée par ladite seconde tête (HT) et une réponse à un signal d'information de suivi de piste capté par ladite première tête (HL) sur la première piste (L11) qui est balayée par ladite première tête (HL) afin de déterminer lesdits premier et second instants.

18. Procédé selon la revendication 17, dans lequel les étapes de détection à des premier et second instants comprennent un échantillonnage du signal d'information de suivi de piste capté sur les première et troisième pistes (L11, L12) respectivement auxdits premier et second instants, avec des impulsions d'échantillonnage générées auxdits premier et second instants en réponse au signal d'information de suivi de piste détecté capté par ladite première tête (HL).

19. Procédé selon la revendication 18, dans lequel ladite étape de production d'un signal de commande de suivi de piste comprend en outre une comparaison des signaux d'information de suivi de piste échantillonnés et de production d'un signal de commande de suivi de piste en fonction de la différence entre eux.

20. Procédé selon la revendication 18, dans lequel les impulsions d'échantillonnage sont séparées en produisant des premier et second retards temporels prédéterminés qui suivent la détection d'un signal d'information de suivi de piste capté par ladite première tête (HL) afin de générer respectivement des première et seconde impulsions d'échantillonnage.

21. Procédé selon la revendication 16, dans lequel ladite étape de production d'un signal de commande de suivi de piste comprend une détection à un premier instant d'un signal d'information de suivi de piste capté par ladite seconde tête (HT) sur la première piste (L11) adjacente à la seconde piste (T11) qui est balayée par ladite seconde tête (HT), une comparaison du signal d'information de suivi de piste capté sur la première piste (L11) audit premier instant au signal d'information de suivi de piste détecté et capté par ladite seconde tête (HT) audit second instant et une réponse à un signal d'information de suivi de piste capté par ladite première tête (HL) sur la première piste (L11) qui est balayée par ladite première tête (HL) afin de déterminer lesdits premier et second instants.

22. Procédé selon la revendication 16, dans lequel lesdits signaux d'information de suivi de piste incluent des signaux de synchronisation et des signaux pilotes, lesdits signaux de synchronisation étant captés par ladite seconde tête (HT) ; et dans lequel ledit signal de commande de suivi de piste est produit en comparant des niveaux de signaux pilotes captés par ladite première tête (HL) à des premier et second instants qui suivent la détection desdits signaux de synchronisation.

23. Procédé selon la revendication 22, dans lequel lesdits signaux de synchronisation sont enregistrés à l'avance par rapport auxdits signaux pilotes.

24. Procédé selon la revendication 22, dans lequel lesdits signaux de synchronisation sont enregistrés en retard par rapport auxdits signaux pilotes.

25. Procédé selon la revendication 16, dans lequel des signaux de synchronisation sont enregistrés dans certaines alternées des pistes qui ne contiennent pas de signaux d'information de suivi de piste, lesdits signaux de synchronisation étant captés par ladite seconde tête (HT) ; et dans lequel ledit signal de commande de suivi de piste est produit en comparant des niveaux de signaux d'information de suivi de piste captés par ladite seconde tête (HT) à des premier et second instants qui suivent une détection desdits signaux de synchronisation.

26. Procédé selon la revendication 16, dans lequel ladite étape de production d'un signal de commande de suivi de piste comprend une détection d'un signal d'information de suivi de piste capté par ladite seconde tête (HT) sur la première piste (L11) adjacente à la seconde piste (T11) balayée par ladite seconde tête (HT) ; un échantillonnage du signal capté par ladite seconde tête (HT) à un instant d'échantillonnage référencé par rapport à la détection de signaux d'information de suivi de piste captés par ladite première tête (HL) en produisant ainsi un signal échantillonné ; une détection du niveau dudit signal échantillonné ; et une production dudit signal de commande de suivi de piste en fonction du niveau détecté.

27. Procédé selon l'une quelconque des revendications 16 à 26, dans lequel lesdites pistes de données sont des pistes obliques au travers dudit support d'enregistrement (11) ; et les première et seconde têtes (HL, HT) sont montées sur un tambour tournant (10), lesdites têtes (HL, HT) étant espacées l'une de l'autre suivant la direction axiale dudit tambour (10) et étant déplacées angulairement l'une par rapport à l'autre suivant la direction de rotation dudit tambour (10).

28. Procédé selon l'une quelconque des revendications 16 à 27, dans lequel le décalage desdites première et seconde têtes (HL, HT) est sensiblement égal au pas desdites pistes de données.
